# EUROPEAN PATENT APPLICATION

(11) **EP 4 386 438 A1**
(43) Date of publication of application: **19.06.2024**
(21) Application number: 22306880.0
(22) Date of filing: 14.12.2022
(51) Int. Cl.: G01S 7/4865, G01S 17/89

(54) **DISTANCE MEASUREMENT DEVICE AND METHOD**

(71) Applicant: STMICROELECTRONICS SA, 92120 Montrouge (FR); STMicroelectronics (Research & Development) Limited, Marlow SL7 1EY (GB)
(72) Inventor: HEARN, Brent, EAST CALDER, WEST LOTHIAN, EH53 0DY (GB); LEBIHEN, Thierry, 92340 BOURG LA REINE (FR); POTHIER, Olivier, 92330 SCEAUX (FR)
(74) Representative: Cabinet Beaumont

(57) **Abstract**

The present disclosure relates to a method comprising:
- the estimation of first distance values associated with a plurality of first pixels (402), on the basis of light pulses of a first light pulse train having a first period (T1);
- the estimation of second distance values associated with a plurality of second pixels (404), the second distance values being estimated for each second pixel on the basis of a second light pulse train having a second period (T2) different from the first period;
- for each of the first pixels (402) being adjacent to one of the second pixels (404), the validation or the invalidation of the first distance values, based on a comparison between the estimations of the first distance value and of at least one of the second distance values of at least one second adjacent pixel (404); and
- the storage of an indication of the first pixels (402) having been validated and/or invalidated.

In an example, the distance value is validated if it corresponds to at least two estimates of distance values associated with adjacent pixels. In another example, the estimate is validated if the value corresponds to the estimates of the distance values of all the adjacent pixels. In another example, the validation and/or invalidation indications further take into account the age of the estimates of the adjacent pixels for the validation or the invalidation of a pixel. The method may be used for disambiguation of distance measurements.

## Description

### Technical field

The present description generally concerns the field of distance measurement methods and devices, and in particular of methods and devices resting on a calculation of the travel time of light pulses.

### Background art

Certain distance measurement devices operate by emitting light pulses towards a scene. For each pulse, the light reflected by objects located in the scene is detected by an element sensitive to the light of the measurement device and is used to determine the travel time of the light pulse. Generally, to obtain an acceptable signal-to-noise ratio, the measurement device is configured to accumulate the signal generated by the light-sensitive element during a sequence of several thousands of pulses. The distance between the object and the device can then be deduced based on an average travel time of the pulse sequence.

The distance measurement device emits the light pulses of the sequence with a given period. The shorter this period, the shorter the duration of the pulse sequence will be, and the more the distance will be able to be calculated rapidly.

However, in this type of measurement device, there exists a "pulse wrap around" problem. A maximum distance that can be unambiguously detected by using a first period of a pulse sequence is half the distance traveled by a pulse within the duration of the first period. Indeed, if the object in the scene is more distant than this maximum distance, the returned pulse will be detected after a next light pulse has been emitted. It is then not possible to determine whether it is an object close to the measurement device, or an object distant by one or a plurality of times the maximum distance. The shorter the pulse period, the shorter this maximum distance will be.

There exists a technical problem to estimate, in a high-performance, rapid, and truthful fashion, distances based on the travel time of light pulses.

### Summary of Invention

There is a need to improve methods and devices of distance measurement by light pulses.

An embodiment overcomes all or part of the disadvantages of known methods and devices of distance measurement with light pulses

One embodiment provides a method comprising:
- the caption of a depth image, the capture comprising:
   the estimation, by a distance sensing device, of first distance values associated with a plurality of first pixels from a pixel array of the device, one or more of the first distance values being estimated for each first pixel, the first distance values being estimated on the basis of travel times of light pulses of a first light pulse train transmitted towards a scene, the first train having a first period; and the estimation, by the distance sensing device, of second distance values associated with a plurality of second pixels from the array, one or more of the second distance values being estimated for each second pixel, the second distance values being estimated on the basis of travel times of light pulses of a second light pulse train transmitted towards the scene, the second train having a second period different from the first period;
- for each of the first pixels being adjacent to at least one of the second pixels, the validation or the invalidation of one or more of the first distance values, on the basis of a comparison between the estimation of the first distance value associated with the first pixel and the estimation of at least one of the second distance values associated with the at least one second adjacent pixel; and
- the storage, in a memory of the device, of an indication of the first pixels having been validated and/or of the first pixels having been invalidated.

According to an embodiment, the method above further comprises:
- for each of the second pixels being adjacent to at least one of the first pixels, its validation or its invalidation, on the basis of a comparison between the estimation of one or more of the second distance values associated with the second pixel and the estimation of at least one of the first distance values associated with the at least one first adjacent pixel; and
- the storage, in the memory, of an indication of the second pixels having been validated and/or of the second pixels having been invalidated.

According to an embodiment, a first pixel among the first pixels being adjacent to the at least one second pixel among the second pixels, is validated if it is determined that the estimation of one or more of the first distance values differs from the estimation of the value of at least one second distance, associated with the at least one second adjacent pixel, of less than a threshold value.

According to an embodiment, the method above further comprises:
- the estimation of one or more third distance values associated with a plurality of third pixels of the array, the third distance values being estimated on the basis of travel times of light pulses of a third light pulse train transmitted towards the scene, the third train having a third period different from both the first and second periods; and
- for each of the first pixels being adjacent to at least one of the third pixels, its validation or its invalidation, further on the basis of a comparison between the estimation of one or more of the first distance values associated with the first pixel and the estimation of at least one of the third distance values associated with the at least one third adjacent pixel.

According to an embodiment, the method above further comprises for each of the first pixels being adjacent to at least one of the second pixels and to at least one of the third pixels, the estimation of an unambiguous distance on the basis of the travel times of the light pulses of the first, second, and third light pulse trains.

According to an embodiment, at least some of the first pixels have adjacent second pixels and/or other adjacent pixels, associated with distances estimated on the basis of trains of light pulses transmitted during capture phases shifted over the time, the validation or the invalidation of at least the some first pixels, taking the age of the capture phases associated with the adjacent pixels into account.

According to an embodiment, the plurality of first pixels are arranged in a checkboard pattern into at least a subpart of the pixel array.

According to an embodiment, the plurality of first pixels and the plurality of second pixels belong to an area corresponding in the scene to a target the distance thereof with respect to the sensing device is shorter than a limit distance.

One embodiment provides a distance sensing device configured to:
- capture a depth image, by:
   estimating one or more first distance values associated with a plurality of first pixels from an array of pixels of the device, on the basis of travel times of light pulses of a first light pulse train transmitted towards a scene, the first train having a first period; and
   estimate one or more second distance values associated with a plurality of second pixels from the array, on the basis of travel times of light pulses of a second light pulse train transmitted towards the scene, the second train having a second period different from the first period;
- validate or invalidate each of the first pixels being adjacent to at least one of the second pixels on the basis of a comparison between the estimation of the one or more of first distance values associated with the first pixel and the estimation of at least one of the second distance values associated with the at least one second adjacent pixel; and
- store, in a memory, an information of the first pixels having been validated and/or of the first pixels having been invalidated.

According to an embodiment, the above distance sensing device is further configured to:
- validate or invalidate each of the second pixels being adjacent to at least one of the first pixels on the basis of a comparison between the estimation of the one or more second distance values associated with the second pixel and the estimation of at least one of the first distance values associated with the at least one first adjacent pixel; and
- store, in the memory, an information of the second pixels having been validated and/or of the second pixels having been invalidated.

According to an embodiment, the above distance sensing device is further configured to:
- determine if the estimation of the one or more first distance values associated with a first pixel among the first pixels being adjacent to the at least one second pixel among the second pixels, differs from the estimation of the value of at least one second distance associated with the at least one second adjacent pixel, of less than a threshold value; and
- if so, validate the first pixel.

According to an embodiment, the above distance sensing device is further configured to:
- estimate one or more third distance values associated with a plurality of third pixels of the array, on the basis of travel times of light pulses of a third light pulse train transmitted towards a scene, the third train having a third period different from both the first and second periods; and
- validate or invalidate each of the first pixels being adjacent to at least one of the third pixels, further on the basis of a comparison between the estimation of the one or more first distance values associated with the first pixel and the estimation of at least one of the third distance values associated with the at least one third adjacent pixel.

According to an embodiment, the above distance sensing device is further configured to estimate an unambiguous distance, for each of the first pixels being adjacent to at least one of the second pixels and to at least one of the third pixels, on the basis of travel times of the light pulses of the first, second, and third light pulse trains.

According to an embodiment, the above distance sensing device is further configured to validate or invalidate at least some first pixels having adjacent second pixels and/or other adjacent pixels, associated with distances estimated on the basis of trains of light pulse transmitted during capture phases shifted over the time, taking the age of the capture phases of the adjacent pixels into account.

According to an embodiment, the above distance sensing device is further configured to arrange the plurality of first pixels in a checkboard into at least a subpart of the pixel array.

### Brief description of drawings

The foregoing features and advantages, as well as others, will be described in detail in the following description of specific embodiments given by way of illustration and not limitation with reference to the accompanying drawings, in which:
Figure 1 schematically shows a distance measurement device;
Figure 2 schematically illustrates a delay detection circuit of Figure 1 in further detail according to an example of embodiment;
Figure 3 is a timing diagram showing light pulses returned by the scene;
Figure 4 illustrates an example of a pixel array for which the distances associated with each pixel are estimated according to an embodiment of the present disclosure;
Figure 5 is a flowchart showing steps of a method of distance measurement according to an example of embodiment;
Figure 6 illustrates an example of a pixel array for which the distances associated with each pixel are estimated according to an embodiment of the present disclosure;
Figure 7 is a flowchart showing steps of a method of distance measurement according to an example of embodiment;
Figure 8 shows an example of the pixels validated and of the pixels invalidated during the capture of a depth image; and
Figure 9 is a flowchart showing steps of a depth image capture method.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, the array of light-sensitive elements has not been detailed, the described embodiments being compatible with arrays of light-sensitive elements known by those skilled in the art, such as single-photon avalanche diode (SPAD) arrays, or CMOS sensors.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

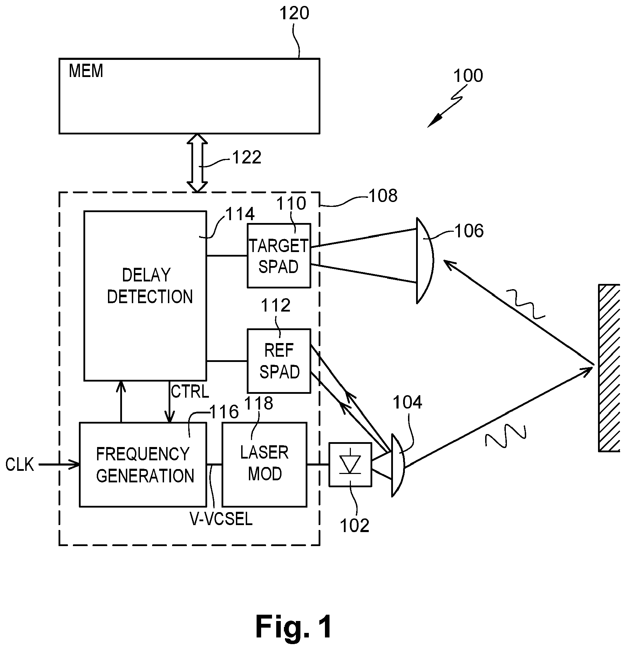

Figure 1 schematically illustrates a distance measurement device 100. Device 100 comprises a light source 102, which is for example a laser, to generate a light pulse beam emitted towards an image scene, for example, via a lens 104. The returned light pulses are for example received via another lens 106.

Distance measurement device 100 further comprises a detection circuit 108 for determining the distance between device 100 and an object located in the scene, having the light pulses reflecting against it. Detection circuit 108 for example comprises a target detector array (TARGET SPAD) 110, which receives, via lens 106, the returned light pulses. Target array 110 for example comprises an array comprising between 4 and several hundreds of elements. As an example, target array 110 is an array of light-sensitive elements. For example, the light-sensitive elements are single-photon avalanche diodes (SPAD) capable of detecting the presence of a single photon. In an example, the array is a 12-by-12 SPAD array comprising 144 elements.

Detection circuit 108 also for example comprises a reference array (REF SPAD) 112, which for example has the same dimensions as target array 110, and which receives an internal reflection of the emitted light pulses. As an example, reference array 112 is a SPAD array.

A delay detection circuit (DELAY DETECTION) 114 is for example coupled to target array 110 and to reference array 112, and estimates the delay between each emitted light pulse and the returned light pulse received by target array 110. Detection circuit 108 also for example comprises a frequency generation (FREQUENCY GENERATION) circuit 116, which generates a voltage signal V-VCSEL delivered to a laser modulation circuit (LASER MOD) 118 to generate a signal for driving light source 102. For example, the driving light source 102 is a Vertical Cavity Surface Emitting Laser (VCSEL).

In certain embodiments, distance measurement device 100 further comprises a memory 120 (MEM) for example coupled to detection circuit 108 via a bus 122. Memory 120 is for example configured to store a depth image, each pixel of the depth image for example indicating an estimate of a distance of one or a plurality of objects in the image scene. Each value of the depth image is associated with a corresponding pixel of the array. Two adjacent pixels of the image scene are associated with two adjacent pixels in the pixel array. In the following, two pixels are called adjacent when they are horizontally or vertically adjacent. Two pixels in diagonal are not considered as adjacent.

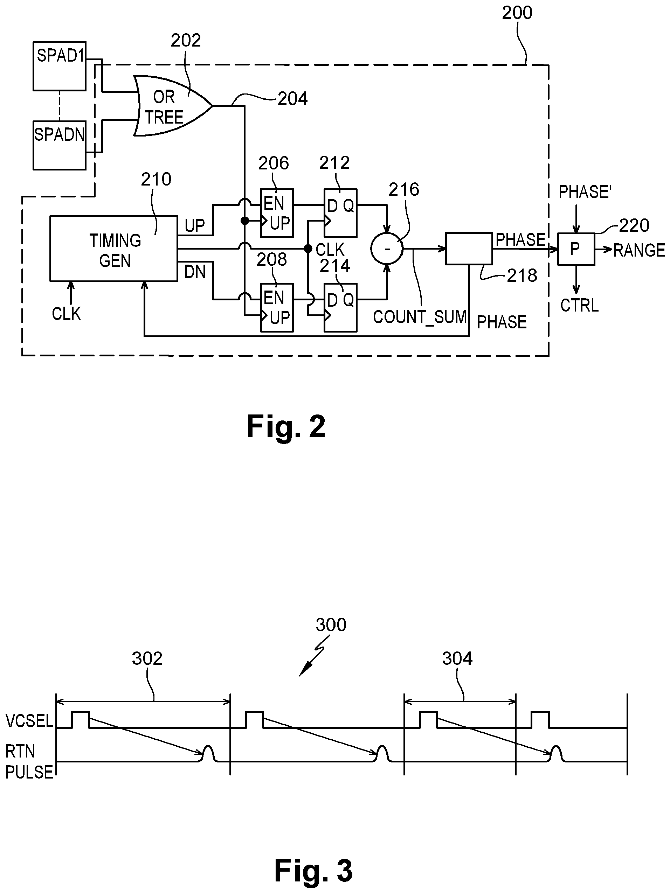

Figure 2 schematically illustrates in further detail a pulse phase calculation circuit 200 forming part of the delay detection circuit 114 of Figure 1 according to an example of embodiment. Circuit 200 enables to convert events, indicated by output signals of an assembly of light-sensitive elements (SPAD1 to SPADN) forming part of target array 110, into a phase signal (PHASE) indicating an estimate of an average phase value of a received light pulse sequence. The example of the circuit 200 of Figure 2 is only a way to perform this conversion, and those skilled in the art will understand that other solutions may be used. For example, in another example, the pulse phase calculation circuit comprises a histogram storage memory enabling, for each pixel, the calculation of the phase of a plurality of objects or targets by a same pulse sequence. An example of such a circuit is for example described in patent application EP3936947, which is herein incorporated by reference as authorized by law.

As an example, circuit 200 enables to estimate a distance value associated with a pixel of the image scene. The assembly of light-sensitive elements SPAD1 to SPADN for example corresponds to a single pixel of the pixel array. In certain cases, N is an integer equal to or greater than two. In other embodiments, each pixel of the array comprises a single light-sensitive element. The estimated phase value is for example stored as the pixel value of the depth image stored in memory 120.

Circuit 200 for example comprises an OR tree (OR TREE) 202 having inputs respectively coupled to each of a set of elements SPAD1 to SPADN of target array 110, which are for example SPAD elements, and delivering, on its output line 204, pulses generated each time an event is detected by one of the elements. Output line 204 is coupled to counters intended to count the detected events. In the example of Figure 2, the output line is coupled to the clock input of an up counter (EN UP) 206 and of a down counter (EN DN) 208. Up counter 206 is activated during an up counting period, according to a signal UP received from a timing generation circuit (TIMING GEN) 210, which receives a clock signal CLK. Similarly, down counter 208 is activated during a down counting period, according to a signal DN received from timing generation circuit 210. The output of counter 206 is for example timed by a flip-flop 212 based on clock signal CLK, and the output of counter 208 is for example timed by a flip-flop 214 based on clock signal CLK. A difference between the outputs of flipflops 212 and 214 is generated by a subtraction module 216 to obtain a signal COUNT_SUM. This signal is analyzed by an analysis circuit 218 to generate a phase signal (PHASE), which is delivered to timing generation circuit 210 and which is used to determine the temporal elements to be applied in a next detection cycle.

The phase signal originating from circuit 200 is for example delivered to a processing circuit (P) 220, which generates control signal CTRL to deliver it to the frequency generation circuit 116 of Figure 1 to control the period of signal VCSEL. Processing circuit 220 also for example receives a phase signal PHASE' generated based on the signal received by reference array SPAD 112. A circuit similar to circuit 200 is for example provided to receive the signals originating from the elements of reference array 112, and to generate signal PHASE' similarly to the generation of signal PHASE. Processing circuit 220 for example determines a distance value RANGE based on a difference between phase signals PHASE and PHASE' for a plurality of periods V-VSCEL.

Figure 3 is a timing diagram 300 showing an example of the voltage signal V-VCSEL used to generate the light pulses, and of the corresponding light pulses (RTN PULSE) returned by the scene. In two first detection phases shown in Figure 3, light pulse period 302 is relatively long, for example, equal to 18 clock periods of clock signal CLK (not illustrated in Figure 3). A high pulse of signal V-VCSEL, and thus the light pulse emission, for example occur close to the beginning of each light pulse period 302. The time of arrival of the detected returned pulse is a function of the distance of the object in the scene, and is for example close to the end of the light pulse period in the example of Figure 3.

However, in two next detection phases shown in Figure 3, the light pulse period 304 is decreased to a relatively short value, for example, equal to 10 clock periods of clock signal CLK. Although the travel time is the same as in the first two detection phases, the returned pulse is now received during a next light pulse period, which means that the phase value will be calculated as if the light pulse had been emitted during the next light pulse period. This phenomenon will here be called "wrap around". Further, in the example of Figure 3, the light pulse is received after the next high pulse of V-VCSEL, and accordingly the sent pulse will generate a valid but erroneous distance value, which will be smaller than the real phase of a time value equal to period 304 of the light pulses.

Although Figure 3 illustrates a case where a light pulse emitted within a given light pulse period is detected during a next light pulse period, for more distant objects, the returned pulse may be detected in still later light pulse periods.

In the example of Figure 3, signal V-VCSEL is a square wave signal, and the generated light pulses also for example form a square wave. However, in alternative embodiments, the signal V-VCSEL used to generate the light pulses, and the actual pulses, might take other shapes. For example, signal V-VCSEL and the light pulses might form a continuous sine wave signal, having peaks which correspond to the light pulses, and valleys where the light signal falls to zero. In such a case, the period of the light pulse signal would be the period of the sine wave. In other examples, signal V-VCSEL might have the shape of triangular waves or a sawtooth shape where the peaks form the light pulses.

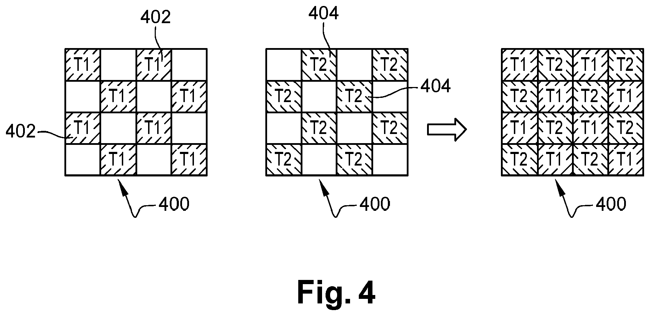

Figure 4 illustrates an example of a depth image 400 comprising the estimated distances associated with each pixel of the pixel array according to an embodiment of the present disclosure.

According to an embodiment, distance measurement device 100 emits a light pulse beam with a period T1, towards the image scene. Distance measurement device 100 is then configured to estimate, for example according to the embodiment described in relation with Figure 2, distance values associated with a subset of pixels of the pixel array, each of the distance values being stored in association with a pixel 402 of the depth image.

In the illustrated example, the pixels of the image screen for which the distance values are estimated are arranged in a checkerboard. In other words, when the distance associated with a pixel is estimated by means of the light pulse beam of period T1, the distances associated with the adjacent pixels are not estimated.

Once the distances associated with pixels 402 have been estimated, distance measurement device 100 for example emits a light pulse beam with a period T2, different from period T1, towards the image scene.

Distance measurement device 100 is then configured to estimate, for example according to the embodiment described in relation with Figure 2, distance values associated with another subset of pixels of the image scene, each of the distance values being stored in association with a pixel 404 of the depth image.

In the example illustrated in Figure 4, the pixels 404 for which the distance values are estimated from the pulse beam of period T2 all are pixels adjacent to pixels 402 and having a distance which has not been estimated by means of the light pulse beam of period T1. Depth image 400 is thus entirely formed of pixels 402 and 404, each pixel 402 having pixels 404 as adjacent pixels and conversely.

According to an embodiment, for each pixel 402, the estimated distance value is compared, for example, by a processing unit of device 100 (not illustrated), with the estimated distances of the adjacent pixels 404, and each pixel 402 is validated or invalidated based on the comparison. For example, if the distance value of pixel 402 corresponds to the estimated distance value of at least one of the adjacent pixels 404, then the pixels having corresponding values are validated.

As an example, it is considered that two distance values correspond if they differ by at most one threshold distance value, in other words one of the distance values is within a range equal to the other distance value, plus or minus the threshold distance value. The threshold value for example corresponds to a percentage of the estimated distance value. In another example, the threshold value is a value set in advance and for example stored in memory 120.

According to an embodiment, when the estimate associated with a pixel 402 or 404 corresponds to none of the estimates associated with the adjacent pixels, the pixel in question is invalidated.

As an example, the validation or the invalidation of a pixel corresponds to the storage, in memory 120, of an indication that the value estimated for this pixel is valid or invalid.

In another example, the storage of the indication corresponds to the storage of the estimate in another memory. In still another example, each pixel of the pixel array is further associated with a bit for example taking value 0 when the estimate is determined as being invalid, and for example value 1 when the estimate is valid.

Although, in the example illustrated in Figure 4, two light pulse beams at two different periods are used to estimate the distance values of the pixels of the image scene, it is of course possible to use a larger number of light pulse beams, all having a different period. A pixel 402 would then for example have adjacent pixels having their distance values estimated based on the different light pulse beams, of different periods.

Although, in the example illustrated in Figure 4, pixels 402 and 404 are arranged in a checkerboard, other arrangements are implementable provided for each pixel to have, as adjacent pixels, pixels having their distance values estimated based on beams having periods different from that used for said pixel.

The comparison of the estimate associated with a pixel with those of the adjacent pixels makes sense, since the inventors of the present disclosure have observed that a target of the image scene generally has a size greater than one pixel. Any pixel forming a target thus has at least one adjacent pixel forming at least a portion of the same target and accordingly the associated estimates, if they are correct, correspond. Further, a target of the image scene, even of minute size, is generally represented by a plurality of pixels due to defocus or bloom effects due to lens 106.

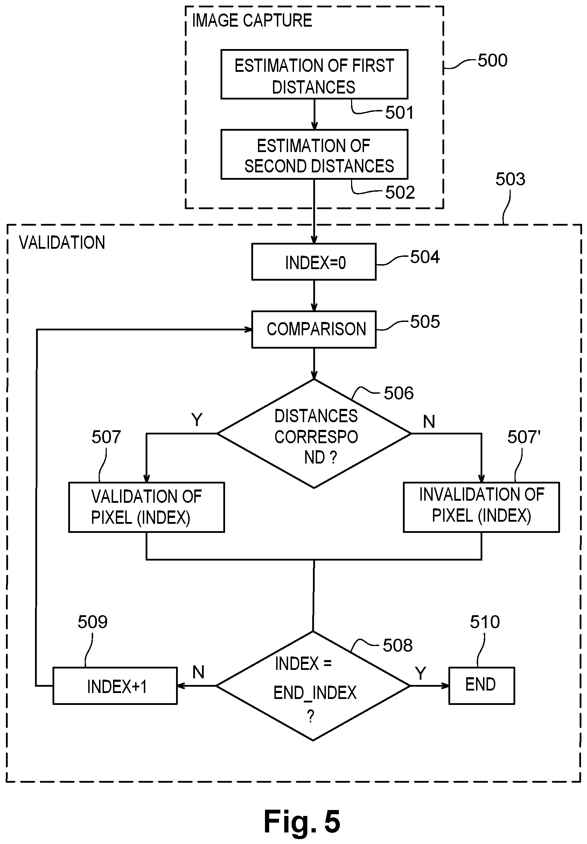

Figure 5 is a flowchart showing steps of a distance measurement method according to an example of implementation.

The method for example comprises a phase 500 (IMAGE CAPTURE) comprising the estimating of distance values associated with the pixels of the image scene, and a validation phase 503.

Phase 500 comprises a step 501 (ESTIMATION OF FIRST DISTANCES) where a light pulse beam, having for example period T1, is sent towards the image scene. The distance values of a first subset of pixels of the image scene are estimated, for example according to the embodiment described in relation with Figure 2. The estimates are then stored in memory 120. As an example, the first subset of pixels having their distance values estimated at step 501 forms a checkerboard, as illustrated by pixels 402 in Figure 4.

Phase 500 further comprises a step 502 (ESTIMATION OF SECOND DISTANCES), subsequent to step 501. Step 502 comprises the emission of a light pulse beam having a period different from the period of the beam emitted at step 501, which is sent towards the image scene. The distance values of a second subset of pixels of the image scene are estimated, for example, according to the embodiment described in relation with Figure 2. The estimates are then stored in memory 120. As an example, the second subset of pixels having their distance values estimated at step 502 forms a checkerboard, as illustrated by pixels 404 in Figure 4.

In an embodiment, phase 500 only comprises two estimation steps, and the first and second subsets of pixels represent, together, all the pixels of the pixel array. In another embodiment, the first and second subsets represent, together, less than all the pixels of the pixel array, and after step 502, phase 500 comprises one or a plurality of additional successive emissions of light pulse beams, each having a different period, different from the period of the beam emitted at steps 501 and 502.

A phase 503 (VALIDATION), subsequent to phase 500, comprises a sequence of steps 504 to 510.

At step 504 (INDEX = 0), an index value, enabling to identify the image pixels, is initialized. As an example, the index value is initialized at a value identifying the pixel belonging to the first row and to the first column of the image.

At step 505 (COMPARISON), the distance value of the pixel, associated with the current index value, is estimated and then compared, for example by the processing unit, with the estimates of the distance values associated with the adjacent pixels in the image.

At a step 506 (DISTANCES CORRESPOND?), it is determined, for example, by the processing unit, whether the estimate of the distance value associated with the pixel associated with the current index value corresponds to at least one of the estimates of the distance values of the adjacent pixels, that is, whether the estimate of the distance value associated with the pixel associated with the current index value differs from at least one of the estimates of the distances values of the adjacent pixels by less than a threshold value. If it is so (branch Y), the method continues at step 507 (VALIDATION OF PIXEL (INDEX)). If it is not so, the method then continues at a step 507' (INVALIDATION OF PIXEL(INDEX)).

During step 507, or respectively during step 507', an indication, specifying that the estimate of the distance value associated with the current index pixel is valid, or respectively invalid, is stored in memory 120.

Although, during the carrying out of step 506, it is determined that the estimate of the distance value is valid if it corresponds to at least one of the values associated with the adjacent pixels, it is of course possible to set another rule. In another example, the distance value is validated if it corresponds to at least two estimates of distance values associated with adjacent pixels. In another example, the estimate is validated if the value corresponds to the estimates of the distance values of all the adjacent pixels. In another example, the validation and/or invalidation indications further take into account the age of the estimates of the adjacent pixels for the validation or the invalidation of a pixel. Thus, the traces of a motion having occurred during the capture are minimized. As one example, if among the adjacent pixels of a given pixel some have estimates that are more recent than others, then only the more recent estimates may be considered when validating or invalidating the estimate of the given pixel. Additionally or alternatively, the threshold distance value, which is used to determine whether the estimation of an adjacent pixel is sufficiently close in order to validate the estimation of the given pixel, may be different depending on the age of the estimates of the adjacent pixels. For example, an estimate of an adjacent pixel that is older may have a lower threshold distance value, meaning that this estimate must be closer to the estimate of the given pixel in order to validate it.

The method then continues at a step 508 (INDEX = END_INDEX) where it is verified, for example, by the processing unit, whether there remain estimates associated with pixels of the pixel array to be validated or invalidated. As an example, the current index value is compared with a maximum index value. If at least another estimate is to be validated or invalidated (branch N), the method continues at a step 509 (INDEX+1). As an example, during step 509, the current index value is incremented and the estimate of the distance value associated with the pixel associated with the new current index value is for example read by the processing unit. The method then resumes at step 505.

The travel of the image, pixel by pixels and according to an index value, is given as an example, and many other ways of scanning the array are possible. As an example, the pixels are scanned in the order in which they have been acquired upon emission of beams. In relation with the example illustrated in Figure 4, the estimates associated with pixels 402 are first compared one by one with the estimates associated with the adjacent pixels 404. The estimates associated with pixels 404 which have for example not been validated during the validation of one of the adjacent pixels 402 are then compared with the estimates associated with the adjacent pixels 402.

When all the estimates have been validated, or invalidated (branch Y at the output of step 508), the method ends at step 510 (END).

After step 510, a depth image representing the image scene and comprising pixels having been validated and/or invalidated is for example constructed and stored in memory 120.

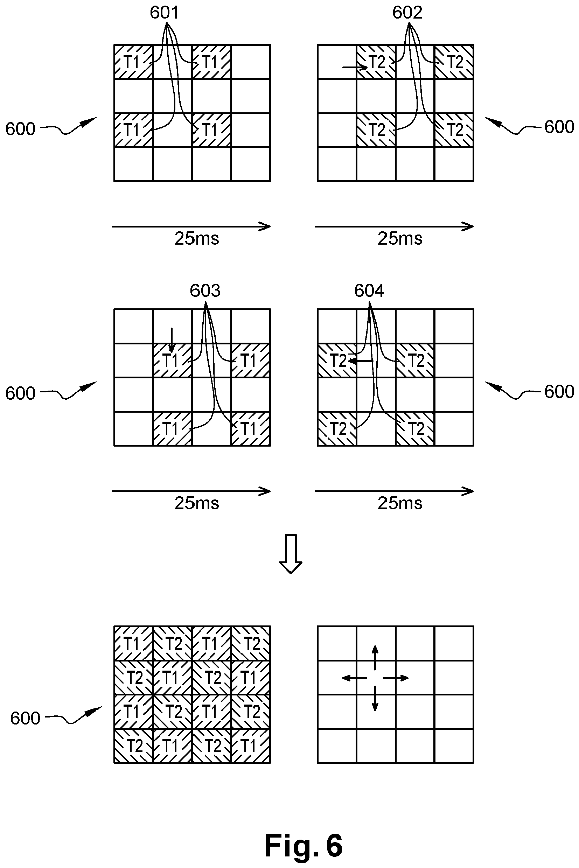

Figure 6 illustrates an example of an image 600 for which all the distances estimated based on a same period T1 and/or T2 are obtained by the emission of a plurality of distinct beams of same period.

Image 600 is of 4-by-4 size in the example of Figure 6, but may have other sizes in other embodiments. Array 600 is divided into four subsets 601 to 604, each comprising 4 pixels. In an example, image 600 is a sub-image of the depth image stored in memory 120.

In the following, the pixels are designated by their location in image 600 in (i,j) form, with i and j integers between 0 and 3. Value i corresponds to the rank of the row where the pixel is located and value j corresponds to the rank of the column where the pixel is located. Although the ranks of the first row and column are here equal, by convention, to value 0, it is quite possible to identify them with value 1, or with any other value.

As an example, the pixels of subset 601 are located on the rows and columns of even rank. The pixels of subset 602 are located on rows of even rank and columns of odd rank. The pixels of subset 603 are located on the rows and columns of odd rank. The pixels of subset 604 are located on the rows of odd rank and the columns of even rank.

According to an embodiment of the present disclosure, distance measurement device 100 emits a light pulse beam of period T1 and estimates the distance values associated with the pixels of subset 601. Once the beam of period T1 has been emitted, device 100 emits another light pulse beam of period T2, different from T1. The distance values associated with the pixels of subset 602 are then estimated from this other beam.

As an example, after the estimation of the distance values associated with the pixels of subsets 601 and 602, the estimate of the distance values associated with pixels (0,0) and (2,0) are respectively validated or invalidated by comparison with the estimates of the distance values associated with pixels (0,1) and (2,1). Further, the estimates of the distance values associated with pixels (0,2) and (2,2) are respectively validated or invalidated by comparison with the estimates of the distance values associated with pixels (0,1) and (0,3) and with pixels (2,1) and (2,3) . Conversely, the estimate of the distance value associated with the pixel (2,1) of subset 602 is validated or invalidated by comparison with the estimate associated with the pixel (2,2) of subset 601.

According to an embodiment, after the estimation of the distance values associated with the pixels of subset 601, device 100 emits a new light pulse beam. This new beam is for example of period T1. In another example, this new beam is of period T3 different from periods T1 and T2. Device 100 then estimates the distance values associated with the pixels of subset 603 based on this new beam.

As an example, after the estimation of the distance values associated with the pixels of subset 603, the estimates for the pixels of subset 602 are compared with the estimates of the pixels of subset 603, and conversely.

According to an embodiment, after the estimations associated with the pixels of subset 603, measurement device 100 emits a new other light pulse beam and the distance values associated with the pixels of subset 604 are estimated based on this new other beam. The period of the new other beam is for example equal to T2. In another example, the new other beam is of period T4, different from periods T1, T2, and T3. The estimates associated with the pixels of subset 604 are for example compared with the estimates associated with the pixels of subset 601.

As an example, each beam is emitted for a same duration. In the example illustrated in Figure 6, each beam is emitted by measurement device 100 for 25 ms. This duration is a nonlimiting example and other emission durations, longer or shorter than 25 ms, are of course possible. Similarly, in another example, the emission time of a beam depends on its period and in this case, the different beams are not emitted for the same time duration.

Since the image scene can move, the estimates associated with subset 604 are capable of being more concordant with the final depth image. Thus, according to an embodiment, a pixel having for example been validated, or invalidated, during a comparison with a subset acquired first may be finally invalidated, or validated as a result of the comparison with pixels of a subset acquired afterwards and being accordingly more recent.

For example, after the acquisition of subset 602, pixel (2,2) is first validated. However, after the acquisition of subset 604, the validated estimate associated with pixel (2,2) corresponds neither to the estimate associated with pixel (1,2) nor to that associated with pixel (3,2) and the pixel is finally invalidated. Conversely, a pixel having been invalidated may finally be validated during a comparison with estimates acquired a posteriori of the validation. Thus, the validation or the invalidation of a pixel can be modified, according to the temporality of the estimates.

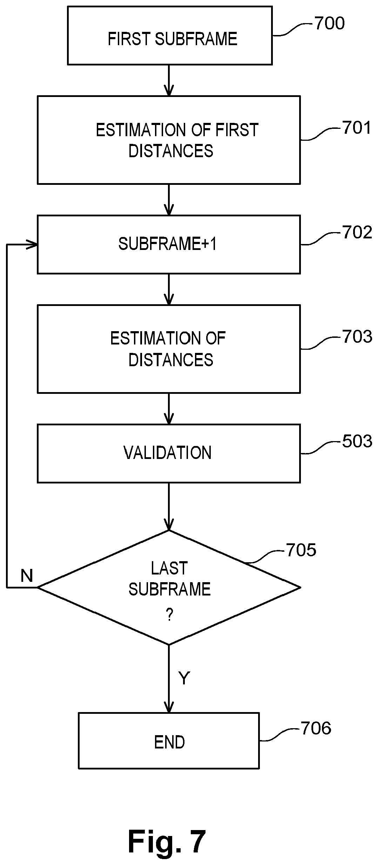

Figure 7 is a flowchart showing steps of a distance measurement method.

At a step 700 (FIRST SUBFR_AME), a first subset of pixels of the image stored in memory 120 is determined. As an example, the subset comprises no pixels adjacent to one another. In other words, any pixel adjacent to a pixel of the subset does not belong to the subset.

At a step 701 (ESTIMATION OF FIRST DISTANCES), device 100 emits a first light pulse beam, having a period for example equal to T1, towards image scene 100. Device 100 then estimates, for example according to the embodiment described in relation with Figure 2, the distance values associated with the pixels of the first subset.

At a step 702 (SUBFRAME+1), another subset of the image is determined. As an example, this subset comprises at least one pixel adjacent to at least one of the pixels of the previously-considered subset.

At a step 703 (ESTIMATION OF DISTANCES), device 100 emits a new light pulse beam, having a period different from T1, towards image scene 100. Device 100 then estimates, for example according to the embodiment described in relation with Figure 2, the distance values associated with the pixels of the subset.

The method then continues in an implementation of phase 503 (VALIDATION) described in relation with Figure 5. During this step, the distance values do not necessarily have been estimated for all the pixels of the image. As an example, during the first implementation of phase 503, the processing unit scans the pixels of the first set of pixels and determines which have at least one adjacent pixel having had its distance value estimated at the previous step 703. The processing unit then compares the estimates and determines the validity or the invalidity of each pixel of the first concerned set. As an example, the processing unit is further configured to validate the adjacent pixel(s) having allowed the validation of the considered pixel.

At a step 705 (LAST SUBFRAME?), measurement device 100 determines whether steps 703 and 503 have been applied to all the pixel subsets of the image. If it is so (branch Y), the method ends at a step 706 (END) and memory 120 for example comprises a depth image, comprising the pixels having been validated during the implementation of the method. As an example, step 706 occurs when all the pixels of the scene image have been validated or invalidated. In another example, the method ends when the pixels corresponding to a sub-part of the image scene, such as for example a target object, have been validated or invalidated. The other pixels being for example considered as belonging to a background and the distance values are not compared with those of the adjacent pixels. As an example, a pixel is considered as belonging to a background when the estimate of its associated distance value exceeds a limiting value.

If, during step 705, it is determined that the method is not completed (branch N), the method resumes in a new implementation of steps 702, 703, and 503.

During each new implementation of step 702, a new subset of the image is considered. The new subset is for example such that at least one of the pixels belonging to it is adjacent to at least one of the pixels of the subsets having already been taken into account.

Further, the period of the light pulse beam emitted at each implementation of step 703 is for example such that the distance values of two adjacent pixels in the image are estimated based on two beams having two distinct periods. As an example, the pixels of the subsets are arranged to alternate a number N of distinct periods during the implementation of step 703. As an example, number N is equal to 2. In another example, N is equal to 3. These values are given as an example and a number of periods greater than three is of course possible.

As an example, during each new implementation of step 503, the processing unit starts for example by comparing the estimates, validated or not, of the pixels of the first subset with, if present, the pixels of the new subset which are adjacent thereto. The processing unit scans, for example, similarly, the pixels of the subsets considered in the previous implementations of step 702. As an example, a pixel having been previously validated is invalidated during this step and/or conversely. In this case, the validation or invalidation indication, stored in memory 120, is updated.

When the pixel image is divided into a plurality of sub-images, for example of 4-by-4 size, each comprising a plurality of subsets, for example 4 subsets of 4 pixels, the method described in relation with Figure 7 is for example applied, sub-image by sub-image.

In the embodiment described in relation with Figure 7, the most recent estimate associated with an adjacent pixel weighs more in the validation or the invalidation of a pixel.

According to an embodiment, the method described in relation with Figures 5 and/or 7 may be used for disambiguation, for example by being combined with a method described in application published as FR3034513 filed on April 2, 2015 and entitled "Wrap around ranging method and circuit", and also published as US10094915, these publications being incorporated herein by reference to the extent permitted by the law. The method described in relation with Figures 5 and/or 7 may for example be used when a pixel having its distance value for example having been estimated from a beam of period T1 has, as adjacent pixels, pixels having their distance values for example having been estimated from beams of period T2 and T3, periods T1, T2, and T3 being distinct from one another.

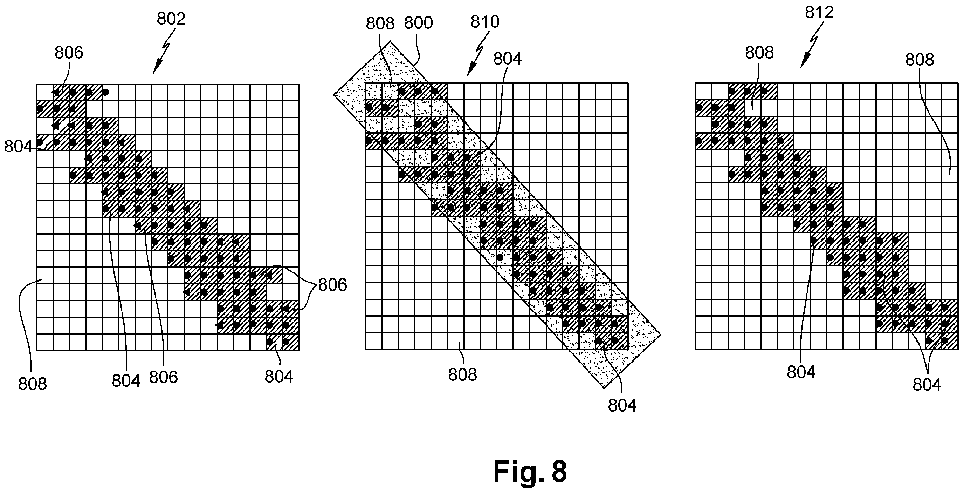

Figure 8 shows an example of the pixels validated and of the pixels invalidated during the capture of a depth image.

In particular, Figure 8 shows the indications of the pixels validated or invalidated during the capture of an image comprising a target 800. Target 800 is for example rectangular and arranged in diagonal in the image scene. An indication of the pixels having been validated during the implementation of a distance measurement method for example takes the form of an image 802. As an example, the measurement of the distance values of each pixel in the scene has been performed after the emission of a plurality of, for example, two, light pulse beams, each having a period different from the others. After each pulse, a distance value estimation is for example performed for each pixel of the image scene. As an example, a pixel is validated if the different estimates of the distance value which are associated thereto correspond.

In image 802: pixels 804 are the pixels having been validated and are represented by circles; and pixels 806 are the pixels having been invalidated and are represented by triangles. Other pixels 808 for example belong to the background of the image scene. As an example, the estimates of their distance value exceed a limiting value and these pixels 808 are for example neither validated, nor invalidated.

An image 810 for example only comprises the valid pixels of pixel array 802. The invalid pixels are for example shown as background pixels. The pixels on the edge of target 800 mainly appear as belonging to the background in image 802.

An image 812 comprises pixels 804 having been validated after the implementation of the method described in relation with Figure 7. Image 812 further comprises pixels 808, representing the background of target 800. The pixels 808 of image 812 are either really background pixels, or pixels having been invalidated during the implementation of the method as described in relation with Figure 7. Some of the pixels of the target having been invalidated during the capture of image 802 are now validated and image 812 represents target 800 more truthfully than array 810.

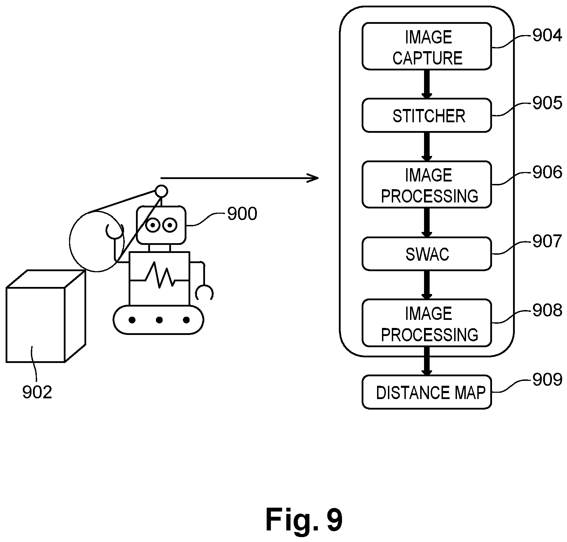

Figure 9 shows an electronic device 900 for example comprising measurement device 100 and a flowchart showing steps of a depth image capture method.

As an example, distance measurement device 100 is integrated in electronic device 900. Although device 900 is illustrated in Figure 9 in the form of a robot, electronic device 900 may be any other sort of electronic device having a functionality for example requiring a depth image capture. As an example, electronic device 900 may as well be a smartphone, a photographic camera, a video camera, etc.

The distance measurement device 100 of device 900 performs a capture of an image scene comprising a target 902, illustrated in Figure 9 by a cube.

As an example, the capture of the image scene starts at a step 904 (IMAGE CATURE) where distance measurement device 100 successively emits a plurality of light pulse sequences. After each emission, distance measurement device 100 estimates the distance values associated with the pixels of a sub-part of the depth image.

As an example, the image is further pre-divided into a plurality of sub-images, for example having a 4-by-4 pixel size, and each sub-image is divided into a plurality of subsets, for example, into 4 subsets comprising 4 pixels. In an example, for each subset, a pixel of the subset is distant from another pixel of the subset by one pixel. As an example, for each sub-image, 4 pulse beams, one for each subset, are emitted so that the distance values of two adjacent pixels are estimated based on two beams having two different periods. Thus, the estimation of the distance values associated with the pixels of a sub-image of 4 by 4 size, divided into subsets of 4 pixels such as for example described in relation with Figure 6, is performed based on four light pulse beams having between 2 and 4 different periods. The distance estimation is then performed, for example, sub-image by sub-image, and for each of the sub-images, subset by subset.

At a step 905 (STICHER), the estimates of the different sub-images are for example gathered in the depth image.

At a step 906 (IMAGE PROCESSING), operations aiming for example at smoothing, at filtering, or at removing effects due to the lens, such as for example defocusing or bloom effects, are applied to the pixel array.

At a step 907 (SWAC - for "Sequential Wrap Around Check"), the estimate associated with each pixel is compared with the estimates associated with the adjacent pixels. The pixel is then validated, or invalidated, according to the method described at step 503 described in relation with Figure 5 or in relation with Figure 7. As an example, for each validated pixel, the associated distance value estimate is stored in another image. As an example, for each invalidated pixel, an error value of "NaN" (Not A Number) type is stored in the other image.

As an example, step 908 is carried out after the acquisition of the estimates of a given number of subsets. As an example, and in relation with Figure 6, steps 906 and 907 are carried out for subsets 601 and 602 and then step 908 is directly carried out, while, for example, measurement device 100 performs in parallel a new implementation of steps 906 and 908 for subsets 603 and 604.

At a step 908 (IMAGE PROCESSING), other operations for example aiming at smoothing, at filtering, at removing bloom or defocusing effects, are applied to the pixel array. As an example, at step 908, error values are replaced with distance values enabling to uniformize the image. As an example, an error value is replaced with the average of the values of the adjacent pixels.

The depth image obtained at step 908 is then for example supplied, at a step 909 (DISTANCE MAP), to a user of electronic device 900. As an example, the depth image is stored in a non-volatile memory of device 900 and is for example displayed on a peripheral screen.

An advantage of the described embodiments is that it is possible to rapidly obtain a depth image with an indication of the valid and/or invalid distances. This is particularly advantageous for applications where it is desirable to obtain distance estimates with a minimum delay, such as for example robotic applications.

Another advantage of the described embodiments is that the validation and/or invalidation indications may be more accurate by taking into account the age of the estimates of the adjacent pixels for the validation or the invalidation of a pixel. Thus, the traces of a motion having occurred during the capture are minimized.

Various embodiments and variants have been described. Those skilled in the art will understand that certain features of these various embodiments and variants may be combined, and other variants will occur to those skilled in the art. In particular, the number of different periods used for the different emitted light pulse beams may vary. The arrangement of the subsets of pixels, as well as the size of the subarrays, and/or the number of pixels in each subset, may vary.

Finally, the practical implementation of the described embodiments and variants is within the abilities of those skilled in the art based on the functional indications given hereabove.

## Claims

1. A method comprising:
- the caption of a depth image, the capture comprising:
the estimation, by a distance sensing device (100), of first distance values associated with a plurality of first pixels (402, 601, 603) from a pixel array (400, 600) of the device, one or more of the first distance values being estimated for each first pixel, the first distance values being estimated on the basis of travel times of light pulses of a first light pulse train transmitted towards a scene, the first train having a first period (T1); and
the estimation, by the distance sensing device, of second distance values associated with a plurality of second pixels (404, 602, 604) from the array, one or more of the second distance values being estimated for each second pixel, the second distance values being estimated on the basis of travel times of light pulses of a second light pulse train transmitted towards the scene, the second train having a second period (T2) different from the first period;
- for each of the first pixels being adjacent to at least one of the second pixels, the validation or the invalidation of one or more of the first distance values, on the basis of a comparison between the estimation of the first distance value associated with the first pixel and the estimation of at least one of the second distance values associated with the at least one second adjacent pixel; and
- the storage, in a memory (120) of the device, of an indication of the first pixels having been validated (804) and/or of the first pixels having been invalidated (806).

2. The method of claim 1, further comprising:
- for each of the second pixels (404, 602, 604) being adjacent to at least one of the first pixels (402, 601, 603), its validation or its invalidation, on the basis of a comparison between the estimation of one or more of the second distance values associated with the second pixel and the estimation of at least one of the first distance values associated with the at least one first adjacent pixel; and
- the storage, in the memory (120), of an indication of the second pixels having been validated (804) and/or of the second pixels having been invalidated (806).

3. The method according to claim 1 or 2, wherein a first pixel among the first pixels (402, 601, 603) being adjacent to the at least one second pixel (404, 602, 604) among the second pixels, is validated if it is determined that the estimation of one or more of the first distance values differs from the estimation of the value of at least one second distance, associated with the at least one second adjacent pixel, of less than a threshold value.

4. The method according to any of the claims 1 to 3, further comprising:
- the estimation of one or more third distance values associated with a plurality of third pixels of the array, the third distance values being estimated on the basis of travel times of light pulses of a third light pulse train transmitted towards the scene, the third train having a third period different from both the first and second periods; and
- for each of the first pixels being adjacent to at least one of the third pixels, its validation or its invalidation, further on the basis of a comparison between the estimation of one or more of the first distance values associated with the first pixel and the estimation of at least one of the third distance values associated with the at least one third adjacent pixel.

5. The method according to claim 4, further comprising for each of the first pixels (402, 601, 603) being adjacent to at least one of the second pixels (404, 602, 604) and to at least one of the third pixels, the estimation of an unambiguous distance on the basis of the travel times of the light pulses of the first, second, and third light pulse trains.

6. The method according to any of the claims 1 to 5, wherein at least some of the first pixels (402, 601, 603) have adjacent second pixels and/or other adjacent pixels, associated with distances estimated on the basis of trains of light pulses transmitted during capture phases shifted over the time, the validation or the invalidation of at least the some first pixels, taking the age of the capture phases associated with the adjacent pixels into account.

7. The method according to any of the claims 1 to 6, wherein the plurality of first pixels are arranged in a checkboard pattern into at least a subpart of the pixel array (400, 600) .

8. The method according to any of the claims 1 to 7, wherein the plurality of first pixels (402, 601, 603) and the plurality of second pixels (404, 602, 604) belong to an area corresponding in the scene to a target the distance thereof with respect to the sensing device is shorter than a limit distance.

9. A distance sensing device (100) configured to:
- capture a depth image, by:
estimating one or more first distance values associated with a plurality of first pixels (402, 601, 603) from an array of pixels (400, 600) of the device, on the basis of travel times of light pulses of a first light pulse train transmitted towards a scene, the first train having a first period (T1); and
estimate one or more second distance values associated with a plurality of second pixels (404, 602, 604) from the array, on the basis of travel times of light pulses of a second light pulse train transmitted towards the scene, the second train having a second period (T2) different from the first period;
- validate or invalidate each of the first pixels being adjacent to at least one of the second pixels on the basis of a comparison between the estimation of the one or more of first distance values associated with the first pixel and the estimation of at least one of the second distance values associated with the at least one second adjacent pixel; and
- store, in a memory (120), an information of the first pixels having been validated (804) and/or of the first pixels having been invalidated (806).

10. The distance sensing device (100) according to claim 9, further configured to:
- validate or invalidate each of the second pixels (404, 602, 604) being adjacent to at least one of the first pixels (402, 601, 603) on the basis of a comparison between the estimation of the one or more second distance values associated with the second pixel and the estimation of at least one of the first distance values associated with the at least one first adjacent pixel; and
- store, in the memory (120), an information of the second pixels having been validated (804) and/or of the second pixels having been invalidated (806).

11. The distance sensing device (100) according to claim 9 or 10, further configured to:
- determine if the estimation of the one or more first distance values associated with a first pixel among the first pixels (402, 601, 603) being adjacent to the at least one second pixel among the second pixels (404, 602, 604), differs from the estimation of the value of at least one second distance associated with the at least one second adjacent pixel, of less than a threshold value; and
- if so, validate the first pixel.

12. The distance sensing device (100) according to any of the claims 9 to 11, further configured to:
- estimate one or more third distance values associated with a plurality of third pixels of the array, on the basis of travel times of light pulses of a third light pulse train transmitted towards a scene, the third train having a third period different from both the first and second periods; and
- validate or invalidate each of the first pixels being adjacent to at least one of the third pixels, further on the basis of a comparison between the estimation of the one or more first distance values associated with the first pixel and the estimation of at least one of the third distance values associated with the at least one third adjacent pixel.

13. The distance sensing device (100) according to claim 12, further configured to estimate an unambiguous distance, for each of the first pixels being adjacent to at least one of the second pixels and to at least one of the third pixels, on the basis of travel times of the light pulses of the first, second, and third light pulse trains.

14. The distance sensing device (100) according to any of the claims 9 to 13, further configured to validate or invalidate at least some first pixels having adjacent second pixels and/or other adjacent pixels, associated with distances estimated on the basis of trains of light pulse transmitted during capture phases shifted over the time, taking the age of the capture phases of the adjacent pixels into account.

15. The distance sensing device (100) according to any of the claims 9 to 14, further configured to arrange the plurality of first pixels in a checkboard into at least a subpart of the pixel array.
